# EUROPEAN PATENT APPLICATION

(11) **EP 2 497 691 A1**
(43) Date of publication of application: **12.09.2012**
(21) Application number: 11157359.8
(22) Date of filing: 08.03.2011
(51) Int. Cl.: B60R 21/00, B60R 16/04

(54) **A safety system**

(71) Applicant: AUTOLIV DEVELOPMENT AB, 447 83 Vargarda (SE)
(72) Inventor: De Oliveira, Nelson, 76000, Rouen (FR); Jacqmarcq, Thierry, 60850, Cuigy En Bray (FR); Evrat, Nicolas, 76160, Saint Leger du Bourg Denis (FR); Dubois, David, 60000, Goincourt (FR)
(74) Representative: Parry, Simon James

(57) **Abstract**

A safety system for a motor vehicle (1) having a battery (2) is disclosed. The system is intended for use in electrically powered motor vehicles, or so-called hybrid motor vehicles, both of which typically comprise large and heavy batteries. The system comprises a battery dislocating mechanism having an initial configuration effective to retain the battery (2) in a substantially fixed position relative to the structure (3,4) of the motor vehicle (1) and being actuable, in response to a signal from at least one crash sensor indicative of an impact involving the vehicle, to adopt an actuated configuration effective to permit guided dislocating movement of the battery (2) relative to at least part of said structure (4) in a direction away from the point of said impact. The safety system is preferably configured for actuation of the battery dislocation mechanism in a manner effective to permit said guided dislocating movement of the battery (2) relative to part of said structure (4) distal to said point of impact but to retain the battery in a substantially fixed position relative to part of said structure proximal to said point of impact.

## Description

The present invention relates to a safety system for a motor vehicle. More particularly, the invention relates to a safety system for a motor vehicle having a battery, and is particularly suited for use in electrically powered or so-called hybrid motor vehicles comprising large and heavy batteries.

In view of increasing concerns over the environmental impact of motor vehicles powered by internal combustion engines, there is now increased interest and importance in providing so called "cleaner" motor vehicles which produce less pollution in the form of gases which are deemed harmful to the environment. Accordingly, it is becoming more and more common to provide motor vehicles which are powered electrically, at least during periods of their operation. For example, it has been proposed to provide electric vehicles which are driven by a large electrical motor drawing its power from a rechargeable battery.

It has also been proposed to provide so-called "hybrid" motor vehicles which typically combine a small, efficient and "clean" internal combustion engine with an electric motor. Hybrid vehicles of this type are configured to be driven by the electric motor whenever possible or convenient, but are driven by the internal combustion engine when the propulsive power offered by the motor is insufficient to meet the instant performance demand, for example because the demand simply exceeds the performance limits of the motor, or because the battery from which the motor draws its power contains insufficient charge. In such an arrangement, the motor typically draws its electric power from a large capacity rechargeable battery arranged to charge from an alternator connected to the engine when the combustion engine is running, and/or to charge from energy recovery arrangements configured to recover energy from the vehicle's brakes. However, it has also been proposed to provide electric-drive arrangements in which the motor draws its electric power from a series of high-capacity capacitors rather than from an electrochemical battery as such. The term "battery" as used in this patent specification is therefore intended to refer to any suitable electrical energy storage device including, but not limited to, an electrochemical battery, a capacitor, a super-capacitor etc.

As will be appreciated, electrically powered vehicles and so-called hybrid vehicles of the general type described above therefore require relatively large batteries in order to provide sufficient electrical power for the propulsive motor. Accordingly, such batteries are typically configured to be very high voltage (typically approximately 300V) and to store a very significant amount of electrical energy (typically between 2 - 10 kWh) and as such represent a significant electrical hazard, particularly in the event of the vehicle being involved in a crash, or an internal short-circuit occurring within the battery Additionally, to meet these performance demands, such batteries are typically very large and heavy. For example, it is not unusual for batteries in such electric or hybrid vehicles to have a mass in the region of 200 to 300 kg.

Because of the very significant size and weight of the batteries, they are commonly located in the region of the vehicle's floor pan, where its large size can be most readily accommodated and where its mass is kept relatively low so as not to adversely affect the overall centre of gravity of the vehicle. For example, some such batteries are located under the floor of the vehicle between the two opposed side sills of the vehicle and bolted to the chassis. Because many such batteries are relatively large, they can often occupy a significant portion of the width of the vehicle, meaning that a very small gap (typically only a few millimetres wide) remains between the battery and the adjacent side sill on each side. This means that during a crash, impact with an external object may result in an intrusion into the battery compartment and localised penetrative damage to the battery, which can result in a significant risk of explosion, fire, electrocution or chemical spillage.

Additionally, batteries of a type suitable for use in electric or hybrid vehicles presently contribute very significantly to the overall cost of the vehicle. For example, it is not uncommon for the battery unit of such a vehicle to account for 10-30% of the total cost of the vehicle. It is therefore desirable to protect the battery unit from damage in the event that the vehicle is involved in an accident, thereby facilitating less-expensive repair of the vehicle.

The sheer size and weight of such batteries, and their typical location under the floor of a motor vehicle is considered to make them particularly vulnerable to damage should the vehicle be involved in accident such as a so-called "dynamic pole side impact". A dynamic pole side impact can be considered to represent a crash scenario in which a relatively small object (such as a vertical pole, or perhaps the corner part of another vehicle) impacts with the vehicle from the side, causing significant and localised intrusions into the battery compartment. Furthermore, with the battery securely fixed to the chassis of the vehicle, the inertia of the vehicle has a tendency to "push" the battery from the opposite side to the impact, so that it becomes compressed between the two side sills of the vehicle, which further increases the risk of damage to the battery.

It is therefore considered desirable to the reduce the "pushing mass" effect arising from the vehicle's inertia as well as reducing the risk of intrusions into the battery pack itself.

It is therefore an object of the present invention to provide an improved safety system for a motor vehicle.

According to the present invention, there is provided a safety system for a motor vehicle having a battery, the system comprising a battery dislocating mechanism having an initial configuration effective to retain the battery in a substantially fixed position relative to the structure of the motor vehicle, the system being characterised by the battery dislocating mechanism being actuable, in response to a signal from at least one crash sensor indicative of an impact involving the vehicle, to adopt an actuated configuration effective to permit guided dislocating movement of the battery relative to at least part of said structure in a direction away from the point of said impact.

Preferably, the system is configured for actuation of the battery dislocation mechanism in a manner effective to permit said guided dislocating movement of the battery relative to part of said structure distal to said point of impact but to retain the battery in a substantially fixed position relative to part of said structure proximal to said point of impact

Advantageously, said battery dislocation mechanism comprises a respective connection assembly on each side of the battery, each said connection assembly having an first configuration effective to retain the respective side region of the battery in a substantially fixed position relative to an adjacent part of the vehicle structure and being operable upon actuation of said mechanism to adopt a second configuration effective to permit guided dislocating movement of said side region of the battery relative to said adjacent part of the vehicle structure.

Conveniently, the system comprises a plurality of said connection assemblies on each side of the battery.

Preferably, the system is configured such that actuation of said battery dislocating mechanism is effective to operate only the or each connection assembly on the side of the battery furthest from the point of said impact.

Advantageously, the system further comprises a controller configured to process signals from the or each said sensor and to control actuation of the battery dislocating mechanism in response to said signals, the controller being operable to determine from said signals on which side of the battery a detected impact occurs and to operate the or each said connection assembly on the opposite side of the battery accordingly.

Conveniently, each said connection assembly comprises a housing fixable to the structure of the motor vehicle, a connection element fixable to the battery, and a locking element; the connection element being slideably engaged with the housing, and the locking element being moveable relative to the housing between an initial locking position in which it engages the connection element and locks the connection element in a substantially fixed position relative to the housing, and a release position in which it permits sliding movement of the connection element relative to the housing.

Preferably, the connection element comprises a locking aperture or recess configured to engage said locking element when the locking element is in said locking position.

Advantageously, the connection element comprises an elongate slot arranged to slidingly receive said locking element when the locking element is in said release position.

Conveniently, said aperture or recess is provided within said slot.

Preferably, said elongate slot is substantially parallel to a transverse axis of the motor vehicle.

Advantageously, said locking element comprises a relatively large part sized to engage said locking aperture or recess when in said locking position, and a relatively small part sized for receipt within said slot when in said release position.

Conveniently, each said connection assembly further comprises an actuator actuable to move said locking element from said locking position to said release position.

Preferably, said locking element comprises a piston slideably mounted within a chamber and said actuator comprises a gas generator arranged to direct a flow of gas against said piston to drive the piston within the chamber.

Advantageously, the system is configured such that actuation of said actuator is effective to drive said relatively large part of the locking element out of engagement with said locking aperture or recess, and to drive said relatively small part into receipt within said slot.

So that the invention may be more readily understood, and so that further features thereof may be appreciated, embodiments of the invention will now be described by way of example with reference to the accompanying drawings in which:
Figure 1 is a schematic perspective view, from below, of an electric or hybrid motor vehicle having a battery pack mounted underneath the floor of the vehicle;
Figure 2 is a perspective view of a connection element forming part of a connection assembly of the present invention;
Figure 3 is a perspective view of a housing of the connection assembly;
Figure 4 is a cross-sectional view of a connection assembly comprising the connection element of figure 2 and the housing of figure 3, shown in an initial locked position;
Figure 5 is a view corresponding generally to that of figure 4, but which shows the connection assembly in an actuated condition;
Figure 6 is a view from below of the motor vehicle of figure 1, showing a plurality of connection assemblies of the type shown in figures 3 to 5 connecting the battery to the structure of the vehicle; and
Figure 7 is a plot of intrusion inside the battery against longitudinal impact position for vehicles with and without a safety system in accordance with the present invention.

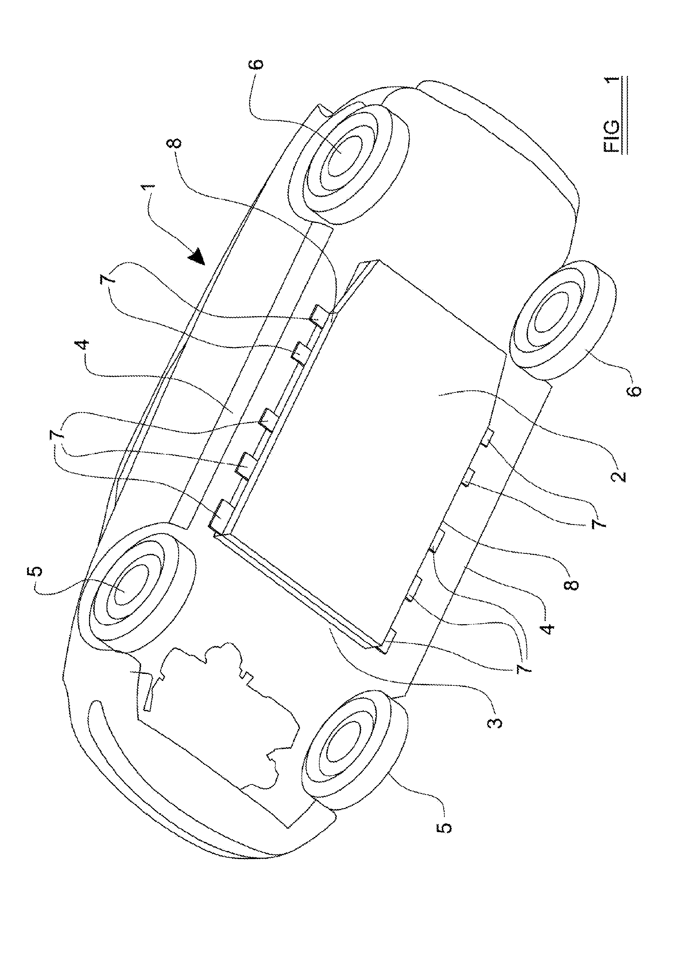

Turning now to consider the drawings in more detail, figure 1 illustrates an electrically powered or so-called hybrid motor vehicle 1 provided with a large rechargeable battery 2 for motive power. As is conventional for such vehicles, the battery is mounted beneath the floor pan 3 of the vehicle between the two oppositely directed side sills 4, and generally between the front wheels 5 and the rear wheels 6. The battery 2 is mounted to the floor/sill structure of the vehicle 1 via a plurality of discrete connection assemblies 7 provided at spaced-apart positions along each longitudinal side edge 8 of the battery. As will be appreciated by those of skill in the art, the battery 2 can take any convenient form and may comprise, for example, a plurality of Li-ion, Li-po, Ni-Mh cells or the like.

As will be noted from figure 1, the battery 2 is very large in comparison to the overall size, and in particular the width of the vehicle 1. The side edges 8 of the battery are thus generally adjacent respective side sills 4 of the vehicle's structure and are actually spaced very closely to the side sills. Any impact from the side of the motor vehicle, in particular with a relatively small object such as a pole, which could damage and deflect the side sill of the vehicle thus poses a significant risk to the integrity and safety of the battery 2. The safety system of the present invention is thus configured to protect the battery 2 in such circumstances, and incorporates specially configured connection assemblies 7 for this purpose.

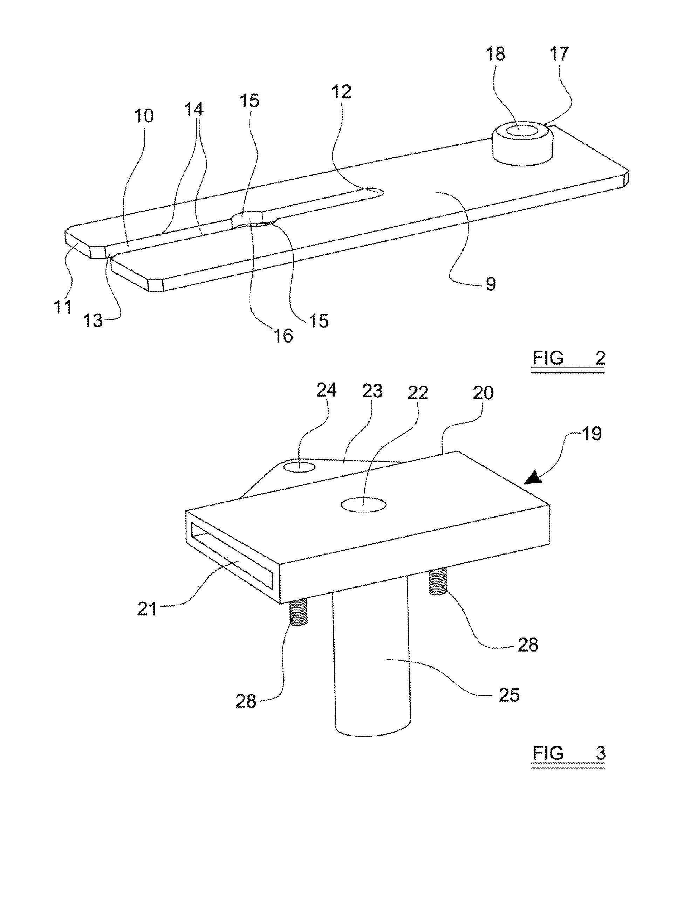

Figure 2 illustrates a connection element 9 which forms part of one of the connection assemblies 7. The connection element takes the form of a generally planar flat plate and is preferably made of metal such as stainless steel. The particular element illustrated has a generally elongate form, although it is to be appreciated that other shapes and configurations are also possible.

The connection element 9 has an elongate re-entrant slot 10 which extends inwardly from one end 11 of the plate and which terminates in a blind end 12 in a generally central region of the plate. In the particular arrangement illustrated, the slot 10 is substantially parallel with the longitudinal axis of the connection element 9. At a position approximately two-thirds of the length of the slot 10 from its open end 13, each side face 14 of the slot is provided with a respective arcuate recess 15. The two recesses 15 are arranged directly opposite one another and cooperate to define a substantially circular locking aperture 16 through the connection element.

At the opposite end of the connection element to the open end 13 of the slot 10, there is provided a fixture 17 for connection of the element 9 to the battery pack 2. In the arrangement illustrated, the fixture 17 takes the form of an upstanding hollow spigot formed around a mounting aperture 18 through the plate.

Figure 3 illustrates a housing 19 which forms another part of the connection assembly 7, as will be described in more detail below. The housing comprises a main part 20 which defines an elongate channel 21 extending through the housing and which is open at both ends. Co-aligned identical apertures 22 are formed through the upper and lower faces of the main part 20 of the housing (only the top aperture being visible in figure 3). The apertures 22 each have a diameter substantially equal to the diameter of locking aperture 16 defined in the connection element 9 by the two opposed recesses 15.

A mounting flange 23 projects outwardly from one side of the main part 20 of the housing, and is provided with a mounting aperture 24 via which the housing may be mounted to the structure of the motor vehicle. Of course, other mounting arrangements could be provided instead of the single flange arrangement illustrated.

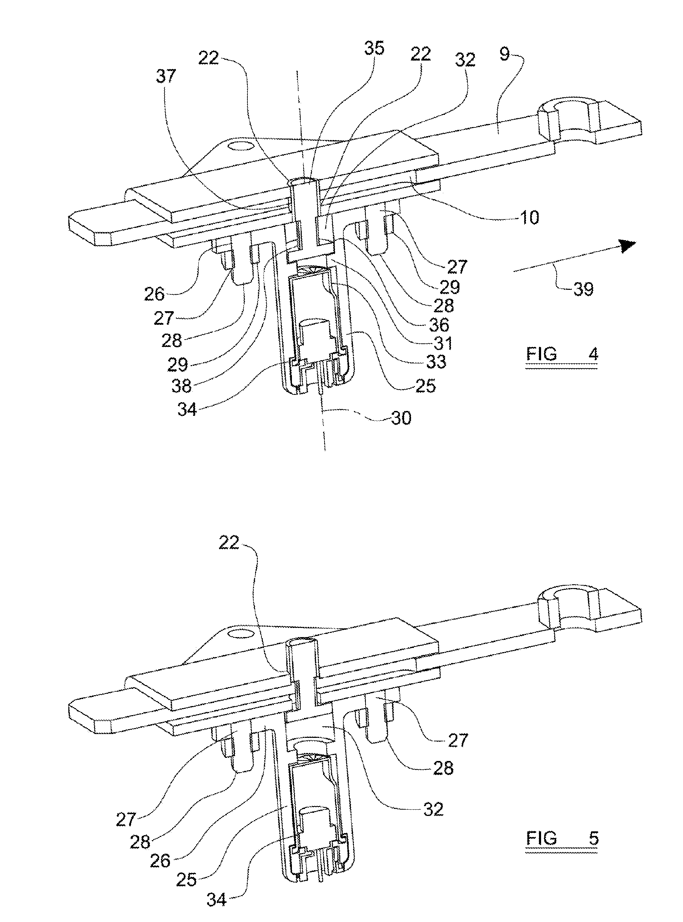

The housing comprises a second part 25 which, in the arrangement illustrated, comprises a generally hollow cylindrical body which is connected to and which extends downwardly (in the orientation illustrated) from the undersurface of the main part 20. As illustrated most clearly in the cross-sectional view of figure 4, the second part 25 of the housing comprises a flange 26 which extends outwardly from the upper end of the cylindrical body part and which is fixed against the undersurface of the main part of the housing 20. More particularly, as shown in figure 4, the flange 26 is provided with a pair of apertures 27, each of which fits over a respective screw-threaded spigot 28 depending downwardly from the undersurface of the main part 20 of the housing. A threaded nut 29 is engaged with each spigot 28 and tightened against the flange 26 to secure the second part of the housing to the first part of the housing as illustrated.

The second part 25 of the housing is fixed to the first part 20 such that the central longitudinal axis 30 of the cylindrical body extends through the centres of the two aligned apertures 22 formed in the first part.

As shown in figure 4, the cylindrical body of the second part 25 of the housing defines an inner chamber which is divided into two parts by an inwardly directed shoulder 31 provided around the inner sidewall of the cylinder. A relatively small upper chamber 32 and a relatively large lower chamber 33 are thus defined. The relatively small upper chamber is open at the top by virtue of the aperture 22 in the lower face of the first part 20 of the housing.

The relatively large lower chamber 33 of the cylindrical body receives a small gas generator 34 which is configured to emit a volume of high pressure gas when actuated upon receipt of an actuation signal from a suitable crash sensor and/or controller forming part of a crash circuit (not shown) in the motor vehicle. The gas generator thus has a gas flow port at its upper end, in direct alignment with the opening defined through the shoulder 31. The gas generator is thus arranged to direct a flow of high pressure gas into the relatively small upper chamber 32 upon actuation.

The connection assembly 7 further comprises a locking element in the form of a piston 35. The piston has a relatively large diameter head 36 at its lower end, and a relatively small diameter locking part 37 at its upper end. The head 36 and the locking part 37 are interconnected by a narrow shank portion 38. The head 36 has an outer diameter which is very slightly less than the inner diameter of the upper chamber 32 so as to be a close sliding fit therein. The locking part 37 has an outer diameter which is very slightly less than the diameter of the two apertures 22 in the housing and the aperture 16 defined in the connection element 9. The shank 38 has a diameter which is very slightly less than the width of the slot 10 defined in the connection element 9.

As illustrated in figure 4, the connection element 9 is received within the elongate channel 21 of the housing 19 as a close sliding fit, and is located in an initial position in which the slot 10 is located generally within the channel and the aperture 16 is between and aligned with the two apertures 22 formed in the housing. The piston 35 is provided in an initial locking position in which the head 36 is located at the lower end of the upper chamber 32 and sits on the shoulder 31. In this position, the locking part 37 of the piston is received and engaged within the co-aligned apertures 22 of the housing and the aperture 16 of the connection element 9. As will be noted, the axial length of the locking part 37 is such that the top end face of the locking part is substantially flush with the top surface of the housing, and the lower end of the locking part is substantially flush with the bottom surface of the housing part 20. In this position, the piston 35 serves to lock the connection element 9 in position relative to the housing 19 and thus prevent the connection element from sliding out of its initial position as illustrated in figure 4.

However, the connection assembly 7 is actuable upon receipt by the gas generator of an actuation signal, in order to unlock the connection element 9 from the housing 19. Upon actuation of the gas generator 34, a flow of high pressure gas is directed against the head 36 of the piston 35. The flow of gas thus serves to drive the piston 35 upwardly, out of its initial locked position and into an alternate release position as illustrated in figure 5. As will be noted, the piston 35 is thus driven upwardly within the upper chamber 32 until the head 36 of the piston engages the undersurface of the first part 20 of the housing around the lower aperture 22. In this position, the locking part 37 of the piston is thus driven out of engagement with the lower aperture 22 and the aperture 16 provided in the slot 10 of the connection element, although the locking part 37 does remain engaged within the upper aperture 22 of the housing. As clearly illustrated in figure 5, when the piston 35 is located in this release position, the narrow shank 38 becomes located within the aperture 16 formed in the slot 10 of the connection element. Because the diameter of the shank 38 is significantly less than the diameter of the aperture 16, but only slightly less than the width of the slot 10, the connection element 9 thus becomes released from the housing for sliding movement relative to the housing, the movement being guided by cooperation between the shank 38 and the slot 10. The connection element is thus released for linear sliding movement relative to the housing 19 as indicated by arrow 39.

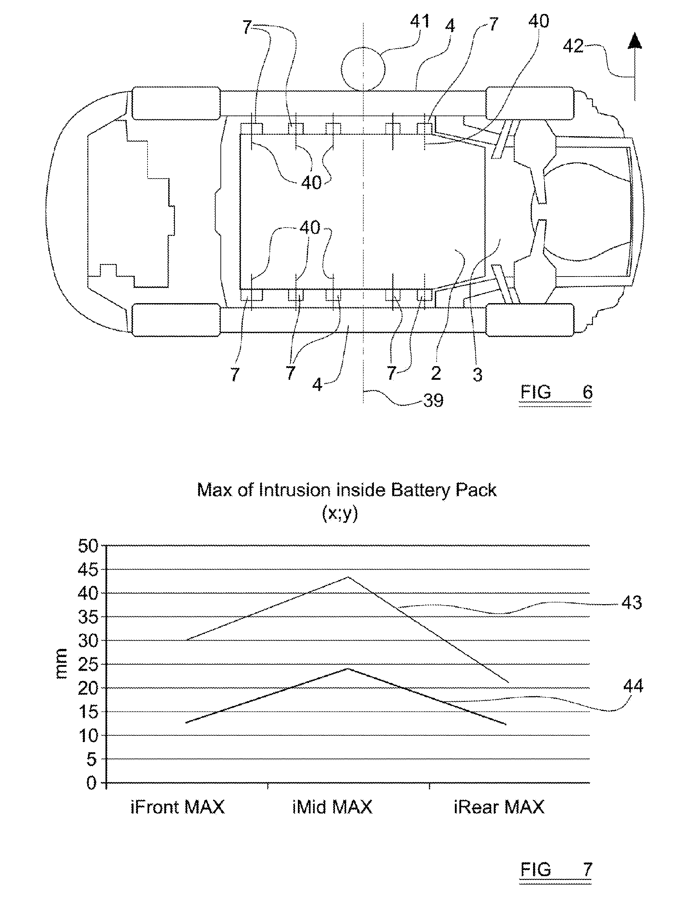

Figure 6 illustrates a battery pack 2 connected to the structure of a motor vehicle 1, underneath the floor 3 and between the two side sills 4, by a plurality of connection assemblies 7 of the type described in detail above. The front of the vehicle is shown to the left in figure 6. As indicated above, the battery 4 is mounted to the floor/sill structure of the vehicle 1 via a plurality of discrete connection assemblies 7 provided at spaced-apart positions along each longitudinal side edge 8 of the battery.

More particularly, the battery is fixedly connected to the connection element 9 of each assembly 7, by being bolted or otherwise affixed to the fixtures 17, and the housing 19 of each assembly is similarly fixedly connected to the structure of the vehicle via the respective mounting flanges 23 and apertures 24. It is also important to note that in preferred embodiments of the invention, the connection assemblies 7 are each arranged such that when connected between the battery 2 and the vehicle structure 1 in this way, each slot 10 lies substantially parallel to a transverse axis 39 of the vehicle, as illustrated schematically by lines 40 in figure 6.

Figure 6 shows the vehicle at the instant of impact with an object such as a pole 41, the side of the vehicle impacting the pole 41 along a crash direction shown schematically by arrow 42.

It is proposed that the vehicle 1 will be provided with a crash detection arrangement comprising one or more sensors and a controller arranged and configured to detect the occurrence, or likely occurrence of a side impact of the nature illustrated schematically in figure 6, in a manner know *per* se. More particularly, it is proposed that the crash detection arrangement will be configured to determine from the signals produced by the sensors on which side of the vehicle 1, and hence on which side of the battery 2, the impact with the object 41 occurs.

The connection assemblies 7 cooperate to define a dislocating mechanism which is actuable under the control of the crash detection arrangement to release the battery 2 from its initial locked position relative to the structure of the vehicle and to permit guided dislocating movement of the battery relative to part of the structure.

More particularly, it is proposed that the crash detection arrangement will be operable to determine on which side of the vehicle the detected impact occurs and to actuate only the connection assemblies 7 provided on the opposite side of the battery. So, in the crash scenario illustrated in figure 6, in which the impact with the pole 40 occurs on the left hand side of the vehicle, the controller will issue an actuation signal to the gas generator of each connection assembly 7 provided along the right hand side of the vehicle distal to the impact, but will issue no such command to the connection assemblies provided along the left hand side of the vehicle proximal to the impact.

Thus, upon actuation of each gas generator, the pistons 35 of each connection assembly 7 distal to the point of impact will be driven from their initial locked positions (as illustrated in figure 4), to their release positions (as illustrated in figure 5), thereby releasing the respective connection elements 9 for sliding movement relative to the housing 19, and hence also the adjacent part of the vehicle structure incorporating the sill 4, in a direction substantially parallel to the transverse axis 39 of the vehicle. The side of the battery 2 opposite to the point of impact is thus released for dislocating movement relative to the adjacent structure of the vehicle, the movement being guided by the sliding interaction of the piston shanks 38 within the respective slots 10. Of course, because the connection assemblies 7 on the opposite side of the vehicle proximate the impact are not actuated, the side of the battery closest to the impact will remain locked relative to the adjacent part of the vehicle structure.

The actuation regime proposed above has been found to significantly reduce the likelihood of, and severity of, any intrusion into the battery 2 resulting from the side impact between the vehicle 1 and the object 41. Because the connection assemblies 7 along the side of the battery 2 closest to the point of impact are not actuated, that side of the battery remains locked in position relative to the adjacent structure of the vehicle, and the so the inwardly directed crash pulse resulting from the impact is immediately transferred to the battery, resulting in its rapid deceleration. In contrast, however, because the connection assemblies 7 along the opposite side of the battery 1 are actuated as described above, that side of the battery, opposite to the side of the impact, becomes free to move in a sliding manner relative to the adjacent part of the vehicle structure on that side. This means that the inertia of the motor vehicle structure, or more particularly the side sill 4 is "disconnected" from the battery in the sense that it does not act to compress the battery against the opposite side sill 4 of the vehicle. The arrangement thus serves to prevent the battery being compressed and damaged by the "pushing mass" effect arising from the vehicle's inertia.

The above-described system has been found to be very effective in preventing or reducing intrusion into the battery 2 in a so-called dynamic pole type impact of the type described above. The effectiveness of the system is conveniently illustrated in figure 7 which represents a plot of battery intrusion in millimetres against longitudinal position for vehicles both with and without the system of the present invention, as tested in a dynamic pole impact at a relative impact speed of 29 kph. Line 43 denotes the plot for a vehicle without the system of the present invention, and line 44 denotes the plot for an identical vehicle fitted with the system of the present invention and actuated in accordance with the regime described above. As will be noted, regardless of the longitudinal position of the impact, the vehicle fitted with the system of the present invention suffered significantly less intrusion into its battery. The results show a particularly notable improvement for the case of an impact occurring at the midpoint of the vehicle.

Whilst the invention has been described above with reference to a specific embodiment, it is to be appreciated that modifications and changes may be made without departing from the scope of the claimed invention. For example, whilst the embodiment described above is configured specifically to protect the battery 2 in the case of a side-impact, other embodiments could be configured to provide protection in the case of a front or rear impact. Such an arrangement could thus be configured so that the connection assemblies are provided along the front and rear regions of the battery 2. Furthermore, the elongate slots 10 of the connection assemblies could advantageously be oriented so as to be substantially parallel to the longitudinal axis of the vehicle in such an arrangement.

It is also envisaged that in some embodiments the connection elements 9 may be pivotally connected to the battery 2 and/or the housings 19 pivotally connected to the structure of the motor vehicle 1. Such an arrangement would thus permit a degree of guided movement of the battery in an oblique direction relative to the structure of the vehicle and would thus provide improved protection to the battery in the event of an oblique impact involving the vehicle.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A safety system for a motor vehicle (1) having a battery (2), the system comprising a battery dislocating mechanism having an initial configuration effective to retain the battery (1) in a substantially fixed position relative to the structure (3, 4) of the motor vehicle (1), the system being **characterised by** the battery dislocating mechanism being actuable, in response to a signal from at least one crash sensor indicative of an impact involving the vehicle (1), to adopt an actuated configuration effective to permit guided dislocating movement of the battery (2) relative to at least part of said structure (4) in a direction away from the point of said impact.

2. A safety system according to claim 1, configured for actuation of the battery dislocation mechanism in a manner effective to permit said guided dislocating movement of the battery (1) relative to part of said structure (4) distal to said point of impact but to retain the battery in a substantially fixed position relative to part of said structure proximal to said point of impact

3. A safety system according to claim 1 or claim 2, wherein said battery dislocation mechanism comprises a respective connection assembly (7) on each side of the battery (2), each said connection assembly (7) having an first configuration effective to retain the respective side region of the battery (2) in a substantially fixed position relative to an adjacent part of the vehicle structure (4) and being operable upon actuation of said mechanism to adopt a second configuration effective to permit guided dislocating movement of said side region of the battery (2) relative to said adjacent part (4) of the vehicle structure.

4. A safety system according to claim 3, comprising a plurality of said connection assemblies (7) on each side of the battery (1).

5. A safety system according to claim 3 or claim 4, the system being configured such that actuation of said battery dislocating mechanism is effective to operate only the or each connection assembly (7) on the side of the battery (2) furthest from the point of said impact.

6. A safety system according to claim 5, further comprising a controller configured to process signals from the or each said sensor and to control actuation of the battery dislocating mechanism in response to said signals, the controller being operable to determine from said signals on which side of the battery (2) a detected impact occurs and to operate the or each said connection assembly (7) on the opposite side of the battery accordingly.

7. A safety system according to any one of claims 3 to 6, wherein each said connection assembly (7) comprises a housing (19) fixable to the structure (3,4) of the motor vehicle, a connection element (9) fixable to the battery, and a locking element (35); the connection element (9) being slideably engaged with the housing (19), and the locking element (35)being moveable relative to the housing (19) between an initial locking position in which it engages the connection element (9) and locks the connection element (9) in a substantially fixed position relative to the housing (19), and a release position in which it permits sliding movement of the connection element (9) relative to the housing (19).

8. A safety system according to claim 7, wherein said connection element (9) comprises a locking aperture or recess (16) configured to engage said locking element (35) when the locking element is in said locking position.

9. A safety system according to claim 7 or claim 8, wherein said connection element (9) comprises an elongate slot (10) arranged to slidingly receive said locking element (35) when the locking element is in said release position.

10. A safety system according to claim 9 as dependant upon claim 8, wherein said aperture or recess (16) is provided within said slot (10).

11. A safety system according to claim 9 or claim 10, wherein said elongate slot (10) is substantially parallel to a transverse axis (39) of the motor vehicle.

12. A safety system according to any one of claims 9 to 11, wherein said locking element (35) comprises a relatively large part (37) sized to engage said locking aperture or recess (16) when in said locking position, and a relatively small part (38) sized for receipt within said slot (10) when in said release position.

13. A safety system according to any one of claims 7 to 12, wherein each said connection assembly (7) further comprises an actuator (34) actuable to move said locking element (35) from said locking position to said release position.

14. A safety system according to claim 13, wherein said locking element (35) comprises a piston slideably mounted within a chamber (33) and said actuator comprises a gas generator (34) arranged to direct a flow of gas against said piston to drive the piston within the chamber (33).

15. A safety system according to claim 14 as dependant upon claim 13, configured such that actuation of said actuator (34) is effective to drive said relatively large part (37) of the locking element (35) out of engagement with said locking aperture or recess (16), and to drive said relatively small part (38) into receipt within said slot (10).
